(19) Europäisches Patentamt
European Patent Office
Office européen des brevets

(11) **EP 2 409 394 B1**

(12) **EUROPÄISCHE PATENTSCHRIFT**

(45) Veröffentlichungstag und Bekanntmachung des Hinweises auf die Patenterteilung:
**18.05.2016  Patentblatt 2016/20**

(21) Anmeldenummer: **10768906.9**

(22) Anmeldetag: **07.10.2010**

(51) Int Cl.:
*H02M 7/797* *(2006.01)*     *H02M 7/483* *(2007.01)*
*H02M 1/00* *(2006.01)*

(86) Internationale Anmeldenummer:
**PCT/EP2010/065033**

(87) Internationale Veröffentlichungsnummer:
**WO 2011/045230 (21.04.2011 Gazette 2011/16)**

(54) **VERFAHREN ZUM BETRIEB EINER UMRICHTERSCHALTUNG SOWIE VORRICHTUNG ZUR DURCHFÜHRUNG DES VERFAHRENS**

METHOD FOR OPERATING AN INVERTER CIRCUIT AND DEVICE FOR PERFORMING THE METHOD

PROCÉDÉ DE FONCTIONNEMENT D'UN CIRCUIT CONVERTISSEUR ET DISPOSITIF POUR LA MISE EN ŒUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2009  EP 09173094**

(43) Veröffentlichungstag der Anmeldung:
**25.01.2012  Patentblatt 2012/04**

(73) Patentinhaber: **ABB Schweiz AG**
**5400 Baden (CH)**

(72) Erfinder:
• WINKELNKEMPER, Manfred
  **CH-5408 Ennetbaden (CH)**
• KORN, Arthur
  **CH-5400 Baden (CH)**

(74) Vertreter: **ABB Patent Attorneys**
**c/o ABB Schweiz AG**
**Intellectual Property CH-IP**
**Brown Boveri Strasse 6**
**5400 Baden (CH)**

(56) Entgegenhaltungen:
EP-A1- 1 253 706     EP-A1- 2 254 233
WO-A2-2007/033852    DE-A1-102008 014 898

• **ANTONIOS ANTONOPOULOS ET AL: "On dynamics and voltage control of the Modular Multilevel Converter", POWER ELECTRONICS AND APPLICATIONS, 2009. EPE '09. 13TH EUROPEAN CONFERENCE ON, IEEE, PISCATAWAY, NJ, USA, 8. September 2009 (2009-09-08), Seiten 1-10, XP031541295, ISBN: 978-1-4244-4432-8**
• **KORN A J ET AL: "Low output frequency operation of the Modular Multi-Level Converter", ENERGY CONVERSION CONGRESS AND EXPOSITION (ECCE), 2010 IEEE, IEEE, PISCATAWAY, NJ, USA, 12. September 2010 (2010-09-12), Seiten 3993-3997, XP031787020, ISBN: 978-1-4244-5286-6**

EP 2 409 394 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung bezieht sich auf das Gebiet der Leistungselektronik. Sie geht aus von einem Verfahren zum Betrieb einer Umrichterschaltung sowie Vorrichtung zur Durchführung des Verfahrens gemäss dem Oberbegriff der unabhängigen Ansprüche.

### Stand der Technik

Umrichterschaltungen werden heute in einer Vielzahl an Anwendungen eingesetzt. Eine in der Spannung besonders einfach zu skalierende Umrichterschaltung ist in der WO 2007/023064 A1 angegeben. Darin weist die Umrichterschaltung ein erstes und ein zweites Teilumrichtersystem auf, wobei die Teilumrichtersysteme über zwei in Serie geschaltete Induktivitäten seriell miteinander verbunden sind. Der Verbindungspunkt der beiden in Serie geschalteten Induktivitäten bildet einen Ausgangsanschluss beispielsweise für eine elektrische Last. Jedes Teilumrichtersystem umfasst mindestens eine zweipolige Schaltzelle, wobei im Falle mehrerer Schaltzellen eines Teilumrichtersystems diese Schaltzellen seriell miteinander verbunden sind. Jede zweipolige Schaltzelle weist zwei in Serie geschaltete ansteuerbare bidirektionale Leistungshalbleiterschalter mit gesteuerter unidirektionaler Stromführungsrichtung und einen zu der Serienschaltung der Leistungshalbleiterschafter parallel geschalteten kapazitiven Energiespeicher auf.

Für den Betrieb einer Umrichterschaltung nach der WO 2007/023064 A1 ist eine gängige Vorrichtung, wie sie in Fig. 1 gezeigt ist, vorgesehen, welche eine erste Ansteuerschaltung zur Erzeugung eines Ansteuersignals zur Ansteuerung der Leistungshalbleiterschalter der Schaltzellen des ersten Teilumrichtersystems und eine zweite Ansteuerschaltung zur Erzeugung eines weiteren Ansteuersignals zur Ansteuerung der Leistungshalbleiterschalter der Schaltzellen des zweiten Teilumrichtersystems aufweist.

Typischerweise wird die Umrichterschaltung nach der WO 2007/023064 A1 derart betrieben, dass am Ausgangsanschluss eine reine Wechselspannung und ein reiner Wechselstrom bereitgestellt werden. Die Auslegung der kapazitiven Energiespeicher der Schaltzellen erfolgt derart, dass die Spannungswelligkeit an den kapazitiven Energiespeichern für einen gegeben Maximalstrom am Ausgangsanschluss und eine gegebene Frequenz dieses Stromes innerhalb einer vorgegeben Schwankungsbreite bleibt. Wird eine kleine Frequenz gewünscht als die, die bei der Dimensionierung zugrunde gelegt wurde, dann steigt die Spannungswelligkeit an. Soll ein Gleichstrom oder ein Wechselstrom mit Gleichstromanteil am Ausgangsanschluss bereitgestellt werden, dann steigt die Spannungswelligkeit nahezu ins Unendliche. Die kapazitiven Energiespeicher müssten in diesem Fall entweder von extern gespeist werden oder unendlich gross gewählt werden, damit sie beim Betrieb mit Gleichstrom oder Gleichstromanteil am Ausgangsanschluss nicht vollständig entladen bzw. beliebig überladen werden.

Darüber hinaus ist in der DE 10 2008 014 898 A1 ein Verfahren zum Betrieb einer Umrichterschaltung nach der vorstehend genannten WO 2007/023064 A1 angegebene, welches eine vom gewünschten Strom am Ausgangsanschluss, d.h. von dessen Frequenz unabhängige Dimensionierung der kapazitiven Energiespeicher der Schaltzellen ermöglicht. Ferner ist in der WO 2007/033852 A2 auch ein gattungsgemässes Verfahren zum Betrieb einer Umrichterschaltung angegeben. Zudem ist in "On Dynamics and Voltage Control of the Modular Multilevel Converter", Power Electronics and Applications, 2009, EPE 2009, 13th European Conference on IEEE, 18.09.2009 ebenfalls ein Verfahren zum Betrieb einer vorstehend genannten Umrichterschaltung angegeben. Darüber hinaus offenbart die EP 1 253 706 A eine Schaltungsanordnung und ein Verfahren zur Übertragung von Wirkleistung, bei welchem Verfahren Spannungen von Zwischenkreiskondensatoren der Stromrichter der Schaltungsanordnung und eine Commonmode-Spannung der wechselspannungsseitigen Anschlüsse der Schaltungsanordnung mittels einer gemeinsamen Regelung geregelt werden. Die Zwischenkreiskondensatorspannungen werden im wesentlichen konstant gehalten, obwohl die zweiten Stromrichter Wirkleistung mit einer Last und mit dem ersten Stromrichter austauschen.

### Darstellung der Erfindung

Aufgabe der Erfindung ist es deshalb, ein alternatives Verfahren zum Betrieb einer Umrichterschaltung anzugeben, mittels welchem eine vom gewünschten Strom am Ausgangsanschluss der Umrichterschaltung, d.h. von dessen Frequenz, unabhängige Dimensionierung der kapazitiven Energiespeicher der Umrichterschaltung ermöglicht. Ferner ist es eine Aufgabe der Erfindung, eine Vorrichtung anzugeben, mit der das erfindungsgemässe Verfahren in besonders einfacher Weise durchgeführt werden kann.

Diese Aufgaben werden durch die Merkmale des Anspruchs 1 bzw. des Anspruchs 7 gelöst. In den abhängigen Ansprüchen sind vorteilhafte Weiterbildungen der Erfindung angegeben.

Die Umrichterschaltung weist ein erstes und ein zweites Teilumrichtersystem auf, wobei die beiden Teilumrichtersysteme seriell miteinander verbunden sind. Der Verbindungspunkt der beiden Teilumrichtersysteme bildet einen Ausgangsanschluss. Jedes Teilumrichtersystem umfasst eine Induktivität und mindestens eine dazu seriell geschaltete zweipolige Schaltzelle, und jede Schaltzelle weist zwei in Serie geschaltete ansteuerbare bidirektionale Leistungshalbleiterschalter mit gesteuerter unidirektionaler Stromführungsrichtung und einen zu der Serienschaltung der Leistungshalbleiterschalter parallel geschalteten kapazitiven Energiespeicher auf. Vorzugsweise entspricht die Anzahl Schaltzellen des ersten Teilumrichtersystems der Anzahl Schaltzellen des zweiten Teilumrichtersystems. Verfahrensmässig werden die Leistungshalbleiterschalter der Schaltzellen des ersten Teilumrichtersystems mittels eines Ansteuersignals und die Leistungshalbleiterschalter der Schaltzellen des zweiten Teilumrichtersystems mittels eines weiteren Ansteuersignals angesteuert. Erfindungsgemäss wird nun das Ansteuersignal aus einem Spannungssignal über den Induktivitäten und einer Schaltfunktionen für die Leistungshalbleiterschalter der Schaltzellen des ersten Teilumrichtersystems gebildet, und das weitere Ansteuersignal wird aus dem Spannungssignal über den Induktivitäten und einer Schaltfunktion für die Leistungshalbleiterschalter der Schaltzellen des zweiten Teilumrichtersystems gebildet, wobei die Schaltfunktionen mittels eines Spannungssignals bezüglich der Spannung am Ausgangsanschluss und einem wählbaren Referenzsignal, insbesondere gleichzeitig, gebildet werden. Für jeden Phasenbaustein wird das Spannungssignal über den Induktivitäten dann aus einem Stromsignal der Teilumrichtersysteme gebildet. Zudem wird für jeden Phasenbaustein das Stromsignal der Teilumrichtersysteme wiederum aus einem Stromsignalamplitudenwert gebildet und für jeden Phasenbaustein wird der Stromsignalamplitudenwert aus dem Stromistwert am Ausgangsanschluss und dem Referenzsignal gebildet. Mittels des Spannungssignals über den Induktivitäten für die Erzeugung des Ansteuersignals und des weiteren Ansteuersignals und durch das Spannungssignal bezüglich der Spannung am Ausgangsanschluss zur Erzeugung der Schaltfunktionen, kann vorteilhaft erreicht werden, dass die Spannungswelligkeit an den kapazitiven Energiespeichern bei einem gewünschten Strom am Ausgangsanschluss der Umrichterschaltung signifikant verringert werden kann, wodurch die Auslegung bzw. Dimensionierung der kapazitiven Energiespeicher lediglich bezüglich der nun verringerten Spannungswelligkeit erfolgen muss und damit unabhängig von dem gewünschten Ausgangsstrom ist. Allgemein kann das Spannungssignal über den Induktivitäten und das Spannungssignal bezüglich der Spannung am Ausgangsanschluss einen beliebigen zeitlichen Verlauf aufweisen. Vorzugsweise ist das Spannungssignal über den Induktivitäten und das Spannungssignal bezüglich der Spannung am Ausgangsanschluss aber beispielsweise eine sinusförmige Schwingung.

Die erfindungsgemässe Vorrichtung zur Durchführung des Verfahrens zum Betrieb der Umrichterschaltung weist für jeden Phasenbaustein eine der Erzeugung des Ansteuersignals dienende erste Ansteuerschaltung auf, welche erste Ansteuerschaltung mit den Leistungshalbleiterschaltern der Schaltzellen des ersten Teilumrichtersystems verbunden ist. Ferner weist die Vorrichtung für jeden Phasenbaustein eine der Erzeugung des weiteren Ansteuersignals dienende zweite Ansteuerschaltung auf, welche zweite Ansteuerschaltung mit den Leistungshalbleiterschaltern der Schaltzellen des zweiten Teilumrichtersystems verbunden ist. Nach der Erfindung ist nun bezüglich eines jeden Phasenbausteins der ersten Ansteuerschaltung zur Bildung des Ansteuersignals die Summe aus dem Spannungssignal über den Induktivitäten und der Schaltfunktion für die Leistungshalbleiterschalter der Schaltzellen des ersten Teilumrichtersystems zugeführt. Bezüglich eines jeden Phasenbausteins ist der zweiten Ansteuerschaltung zur Bildung des weiteren Ansteuersignals die Summe aus dem Spannungssignal über den Induktivitäten und einer Schaltfunktion für die Leistungshalbleiterschalter der Schaltzellen des zweiten Teilumrichtersystems zugeführt. Darüber hinaus ist bezüglich eines jeden Phasenbausteins eine erste Berechnungseinheit zur Berechnung der Schaltfunktionen aus einem Spannungssignal bezüglich der Spannung am Ausgangsanschluss und einem wählbaren Referenzsignal vorgesehen, wobei die Spannungssignale bezüglich der Spannung an den Ausgangsanschlüssen der Phasenbausteine phasengleich gewählt sind. Ferner ist bezüglich eines jeden Phasenbausteins eine zweite Berechnungseinheit zur Bildung des Spannungssignals über den Induktivitäten aus dem besagten Stromsignal der Teilumrichtersysteme vorgesehen. Zudem ist bezüglich eines jeden Phasenbausteins eine dritte Berechnungseinheit zur Bildung des Stromsignals der Teilumrichtersysteme aus dem Stromsignalamplitudenwert sowie eine vierte Berechnungseinheit zur Bildung des Stromsignalamplitudenwertes aus dem Stromistwert am Ausgangsanschluss und dem Referenzsignal vorgesehen. Die erfindungsgemässe Vorrichtung zur Durchführung des Verfahrens zum Betrieb der Umrichterschaltung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

**Kurze Beschreibung der Zeichnungen**

Es zeigen:

Fig. 1 eine Ausführungsform einer Vorrichtung zur Durchführung eines Verfahrens zum Betrieb einer Umrichterschaltung nach dem Stand der Technik,

Fig. 2    eine Ausführungsform einer erfindungsgemässen Vorrichtung zur Durchführung des erfindungsgemässen Verfahrens zum Betrieb einer Umrichterschaltung,

Fig. 3    ein zeitlicher Verlauf eines Gesamtausgangsstromes der Umrichterschaltung,

Fig. 4    ein zeitlicher Verlauf einer Spannung am Ausgangsanschluss der Umrichterschaltung, und

Fig. 5    ein zeitlicher Verlauf des Stromes durch das erste Teilumrichtersystem und des Stromes durch das zweite Teilumrichtersystem.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

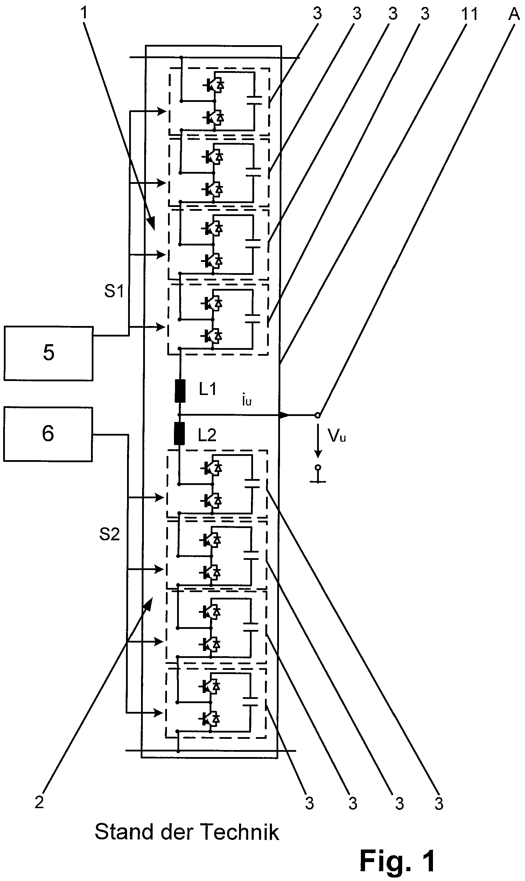

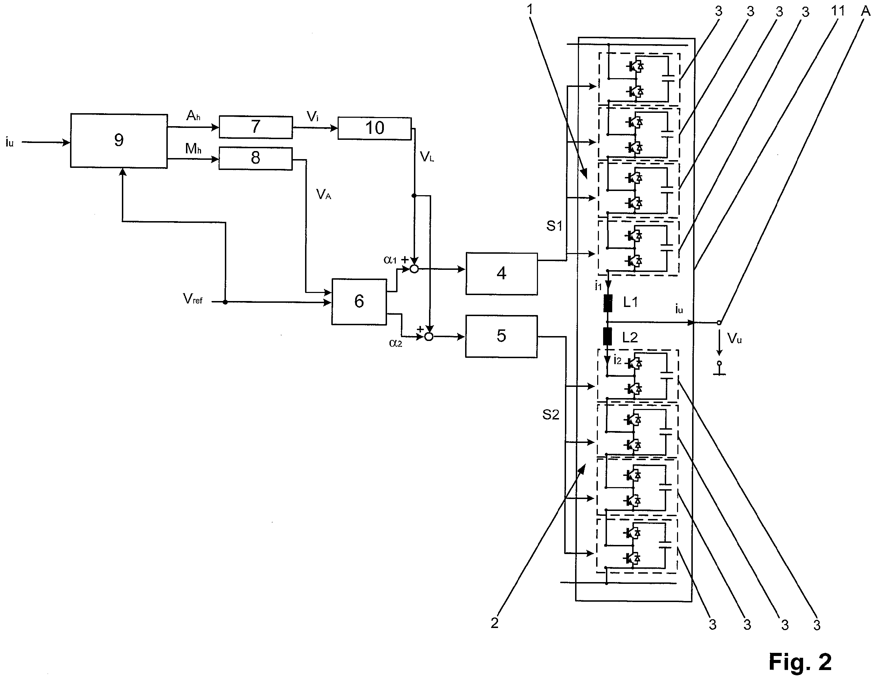

In Fig. 1 ist, wie eingangs bereits erwähnt, eine Ausführungsform einer Vorrichtung zur Durchführung eines Verfahrens zum Betrieb einer Umrichterschaltung nach dem Stand der Technik dargestellt, wobei in Fig. 1 der Übersichtlichkeit halber nur ein Phasenbaustein 11 der Umrichterschaltung dargestellt ist. Fig. 2 zeigt eine Ausführungsform einer erfindungsgemässen Vorrichtung zur Durchführung des erfindungsgemässen Verfahrens zum Betrieb einer Umrichterschaltung, wobei auch in Fig. 2 der Übersichtlichkeit halber nur ein Phasenbaustein 11 der Umrichterschaltung gezeigt ist. Die Umrichterschaltung gemäss Fig. 2 weist allgemein mindestens zwei Phasenbausteine 11 auf, wobei jeder Phasenbaustein ein erstes und ein zweites Teilumrichtersystem 1, 2 umfasst und die beiden Teilumrichtersysteme 1, 2 seriell miteinander verbunden sind. Der Verbindungspunkt der Teilumrichtersysteme 1, 2 bildet einen Ausgangsanschluss A. Jedes Teilumrichtersystem 1, 2 umfasst allgemein eine Induktivität L1, L2 und mindestens eine dazu seriell geschaltete zweipolige Schaltzelle 3. Im Falle mehrerer Schaltzellen 3 eines Teilumrichtersystems 1, 2 sind diese Schaltzellen 3 seriell miteinander verbunden, wie in Fig. 2 gezeigt. Jede Schaltzelle 3 weist zwei in Serie geschaltete ansteuerbare bidirektionale Leistungshalbleiterschalter mit gesteuerter unidirektionaler Stromführungsrichtung und einen zu der Serienschaltung der Leistungshalbleiterschalter parallel geschalteten kapazitiven Energiespeicher auf. Der ansteuerbare Leistungshalbleiterschalter ist insbesondere als Abschaltthyristor (GTO - Gate Turn-Off Thyristor) oder als integrierter Thyristor mit kommutierter Ansteuerelektrode (IGCT - Integrated Gate Commutated Thyristor) mit jeweils einer antiparallel geschalteten Diode ausgebildet. Es ist aber auch denkbar, einen ansteuerbaren Leistungshalbleiterschalter beispielsweise als Leistungs-MOSFET mit zusätzlich antiparallel geschalteter Diode oder als Bipolartransistor mit isoliert angeordneter Gateelektrode (IGBT) mit zusätzlich antiparallel geschalteter Diode auszubilden. Vorzugsweise entspricht die Anzahl Schaltzellen 3 des ersten Teilumrichtersystems 1 der Anzahl Schaltzellen 3 des zweiten Teilumrichtersystems 2.

Verfahrensmässig werden die Leistungshalbleiterschalter der Schaltzellen 3 des ersten Teilumrichtersystems 1 mittels eines Ansteuersignals S1 und die Leistungshalbleiterschalter der Schaltzellen 3 des zweiten Teilumrichtersystems 2 mittels eines weiteren Ansteuersignals S2 angesteuert. Das Ansteuersignal S1 der Schaltzellen 3 des ersten Teilumrichtersystems 1 und das Ansteuersignal S2 der Schaltzellen 3 des zweiten Teilumrichtersystems 2 ist für jede Schaltzelle 3 vorzugsweise zeitlich versetzt, so dass jede Schaltzelle 3 vorteilhaft zeitlich versetzt angesteuert werden kann. Erfindungsgemäss wird nun für jeden Phasenbaustein 11 das Ansteuersignal S1 aus einem Spannungssignal $V_L$ über den Induktivitäten L1, L2 und einer Schaltfunktion $\alpha_1$ für die Leistungshalbleiterschalter der Schaltzellen 3 des ersten Teilumrichtersystems 1, insbesondere aus der Summe beider Grössen, gebildet, und das weitere Ansteuersignal S2 wird aus dem Spannungssignal $V_L$ über den Induktivitäten L1, L2 und einer Schaltfunktionen $\alpha_2$ für die Leistungshalbleiterschalter der Schaltzellen 3 des zweiten Teilumrichtersystems 2, insbesondere aus der Summe beider Grössen, gebildet, wobei die Schaltfunktionen $\alpha_1$, $\alpha_2$ mittels eines Spannungssignals $V_A$ bezüglich der Spannung $V_u$ am Ausgangsanschluss A des zugehörigen Phasebausteins 11 und einem wählbaren Referenzsignal $V_{ref}$, insbesondere gleichzeitig, gebildet werden, wobei die Spannungssignale $V_A$ bezüglich der Spannung $V_u$ an den Ausgangsanschlüssen A der Phasenbausteine 11 phasengleich gewählt werden. Beim Spannungssignal $V_L$ über den Induktivitäten L1, L2 handelt es sich um einen Spannungssollwert über den Induktivitäten L1, L2. Vorzugsweise wird als Referenzsignal $V_{ref}$ ein Referenzspannungssignal bezüglich der Spannung $V_u$ am Ausgangsanschluss A gewählt, welches beispielsweise durch Ausregelung des Istwertes des Stromes $i_u$ am Ausgangsanschluss A auf einen Sollwert gebildet wird.

Mittels des Spannungssignals $V_L$ über den Induktivitäten L1, L2 für die Erzeugung des Ansteuersignals S1 und des weiteren Ansteuersignals S2 und durch das Spannungssignal $V_A$ bezüglich der Spannung $V_u$ am Ausgangsanschluss A zur Erzeugung der Schaltfunktionen $\alpha_1$, $\alpha_2$, kann vorteilhaft erreicht werden, dass die Spannungswelligkeit an den kapazitiven Energiespeichern bei einem gewünschten Strom $i_u$ am Ausgangsanschluss A der Umrichterschaltung signifikant verringert werden kann, wodurch die Auslegung bzw. Dimensionierung der kapazitiven Energiespeicher lediglich bezüglich der nun verringerten Spannungswelligkeit erfolgen muss und damit unabhängig von dem gewünschten Ausgangsstrom $i_u$ ist. Allgemein kann das Spannungssignal $V_L$ über den Induktivitäten L1, L2 und das Spannungssignal $V_A$ bezüglich der Spannung $V_u$ am Ausgangsanschluss A einen beliebigen zeitlichen Verlauf aufweisen. Das Spannungssignal $V_L$ über den Induktivitäten L1, L2 und das Spannungssignal $V_A$ bezüglich der Spannung $V_u$ am Ausgangsanschluss A kann also beispielsweise eine sinusförmige Schwingung sein.

Ein Ziel ist es beispielsweise, dass aus der Leistung, die aus dem Spannungssignal $V_A$ bezüglich der Spannung $V_u$ am Ausgangsanschluss und aus einem Stromsignal $V_i$ der Teilumrichtersysteme 1, 2 gebildet wird, der unerwünschte Anteil in den kapazitiven Energiespeichern der Schaltzellen 3 kompensiert wird. Beim Stromsignal $V_i$ der Teilumrichtersysteme 1, 2 durch handelt es sich um einen Stromsollwert eines Kreisstromes, der durch die Teilumrichtersysteme 1, 2 der Umrichterschaltung, nicht jedoch über den Ausgangsanschluss A fliesst. Allgemein gilt:

- Wenn ein Strom $i_u$ am Phasenausgang A fliesst und eine Spannung $V_u$ am Phasenausgang A anliegt, dann ist die Leistung in den kapazitiven Energiespeichern der oberen Schaltzellen 3 $P_{C,1}=(i_U(t)/2+i_X(t))\cdot V_{U1}(t)$, mit $i_U/2$ = halber Laststrom, $i_X$ = eingeprägter Kreisstrom (kann der Einfachheit halber Null sein, muss aber nicht), $V_{U1}$=Zweigspannung über den oberen Schaltzellen 3. Das ergibt mit $i_X=0$ eine Leistung $P_{C,1}=i_U(t)/2\cdot V_{U1}(t)$
- Nun wird gezielt besagtes Stromsignal $V_i(t)$ der Teilumrichtersysteme 1, 2 und besagtes Spannungssignal $V_A(t)$ am Phasenausgang A eingeprägt. Letztere taucht auch in der Zweigspannung $V_{U1}$ über den oberen Schaltzellen 3 auf, so dass die Leistung nun $P_{C,1}=(i_U(t)/2+V(t))$ $(V_{U1}(t)+V_A(t))=i_U(t)/2V_{U1}(t)+i_U(t)/2\cdot V_A(t)+V_i(t)$ $V_{U1}(t)+$ $V_i(t)\cdot V_A(t)$.
- Kompensiert werden soll $i_U(t)/2\cdot V_{U1}(t)$ und zwar durch einen Anteil der Leistung $V_i(t)\cdot V_A(t)$. Die zusätzlich auftretenden Leistungen $i_U(t)/2\cdot V_A(t)+V_i(t)\cdot V_{U1}(t)$ werden im allgemeinen nicht kompensiert.
- Dieses Verfahren macht Sinn, wenn die Leistungen $i_U(t)/2\cdot V_A(t)+$ $V_i(t)\cdot V_{U1}(t)$ und der unkompensierte Anteil der Leistung $V_i(t)*V_A(t)$ jeweils Frequenzanteile enthalten deren Verhältnis zwischen Amplitude zu Frequenz geringer ist als die der Frequenzanteile in $i_U(t)\cdot V_{U1}(t)$ und somit eine geringere Spannungsschwankung im kapazitiven Energiespeicher hervorrufen. Alle $V_i(t)$ und $V_A(t)$, die zu diesem Ergebnis führen, sind für das beschriebene Verfahren einsetzbar.

Nach der Erfindung wird die Schaltfunktion $\alpha_1$ für die Leistungshalbleiterschalter der Schaltzellen 3 des ersten Teilumrichtersystems 1 aus dem Spannungssignal $V_A$ bezüglich der Spannung $V_u$ am Ausgangsanschluss A und dem wählbaren Referenzsignal $V_{ref}$ nach folgender Formel gebildet:

$$\alpha_1 = \frac{1}{2}(1 - V_{ref} - V_A) \qquad [1]$$

Desweiteren wird Schaltfunktion $\alpha_2$ für die Leistungshalbleiterschalter der Schaltzellen 3 des zweiten Teilumrichtersystems 2 aus dem Spannungssignal $V_A$ bezüglich der Spannung $V_u$ am Ausgangsanschluss A und dem wählbaren Referenzsignal $V_{ref}$ nach folgender Formel gebildet:

$$\alpha_2 = \frac{1}{2}(1 + V_{ref} + V_A) \qquad [2]$$

Ein besonders einfaches Verfahren ergibt sich, wenn das Spannungssignal $V_A$ bezüglich der Spannung $V_u$ am Ausgangsanschluss und ein Stromsignal $V_i$ als Schwingungssignal, beispielsweise als sinusförmige Schwingung, gewählt wird. Auf diesen Sachverhalt wird nachfolgend näher eingegangen.

Nach der Erfindung wird für jeden Phasenbaustein 11 das Spannungssignal $V_L$ über den Induktivitäten L1, L2 aus einem Stromsignal $V_i$ der Teilumrichtersysteme 1, 2 gebildet, wie nachfolgende Formel verdeutlicht:

$$V_L = V_i \cdot (j\omega(L1+L2)) \qquad [3]$$

Das Stromsignal $V_i$ der Teilumrichtersysteme 1, 2 wird für jeden Phasenbaustein 11 vorzugsweise wiederum aus einem Stromsignalamplitudenwert $A_h$ gebildet, insbesondere durch Multiplikation des Stromsignalamplitudenwertes $A_h$ mit einer Schwingung frei wählbarer Frequenz $\omega$ und Phasenverschiebung $\varphi$, wie nachfolgende Formel verdeutlicht:

$$V_i = A_h \cdot \cos(\omega t + \varphi) \qquad\qquad [4]$$

Der Stromsignalamplitudenwert $A_h$ in Formel [4] wird für jeden Phasenbaustein 11 allgemein aus dem Stromistwert $i_u$ am Ausgangsanschluss A, insbesondere aus dem Gleichstromanteil $I_0$ des Stromes $i_u$ am Ausgangsanschluss A, welcher Stromistwert $i_u$ beispielsweise gemessen wird, und dem Referenzsignal $V_{ref}$ gebildet. Der Strom $i_1$ durch das erste Teilumrichtersystem 1 und der Strom $i_2$ durch das zweite Teilumrichtersystem 2 ergeben sich folgendermassen:

$$i_1(t) = \frac{I_0}{2} \cdot [1 + V_{ref} + M_h \cdot \cos(\omega t + \varphi)] + A_h \cdot \cos(\omega t + \varphi) \qquad [4.1]$$

$$i_2(t) = \frac{I_0}{2} \cdot [-1 + V_{ref} + M_h \cdot \cos(\omega t + \varphi)] + A_h \cdot \cos(\omega t + \varphi) \qquad [4.2]$$

und die Ströme $i_{c,1}$ in den kapazitiven Energiespeichern der Schaltzellen 3 des ersten Teilumrichtersystems 1 die Ströme $i_{c,2}$ in kapazitiven Energiespeichern der Schaltzellen 3 des zweiten Teilumrichtersystems 2 ergeben sich dann zu:

$$i_{c,1}(t) = \frac{I_0}{4}(1 + V_{ref})(1 - V_{ref}) + \left( \frac{I_0 \cdot M_h}{4}(1 - V_{ref}) + \frac{A_h}{2}(1 - V_{ref}) - \frac{I_0 \cdot M_h}{4}(1 + V_{ref}) \right) \cos(\omega t + \varphi)$$
$$- \frac{I_0 \cdot M_h^2}{8}(1 + \cos(2 \cdot (\omega t + \varphi))) - \frac{A_h \cdot M_h}{4}(\cos(\Delta\varphi)(1 + \cos(2 \cdot (\omega t + \varphi))))$$

$$[4.3]$$

$$i_{c,2}(t) = -\frac{I_0}{4}(1 + V_{ref})(1 - V_{ref}) + \left( -\frac{I_0 \cdot M_h}{4}(1 - V_{ref}) + \frac{A_h}{2}(1 - V_{ref}) - \frac{I_0 \cdot M_h}{4}(1 + V_{ref}) \right) \cos(\omega t + \varphi)$$
$$+ \frac{I_0 \cdot M_h^2}{8}(1 + \cos(2 \cdot (\omega t + \varphi))) + \frac{A_h \cdot M_h}{4}(\cos(\Delta\varphi)(1 + \cos(2 \cdot (\omega t + \varphi))))$$

$$[4.4]$$

Die Gleichungen [4.3] und [4.4] enthalten jeweils DC Anteile, die sich vorteilhaft gegenseitig aufheben sollen, so dass sich aus der Gleichung [4.3] bzw. [4.4] zur Bildung des Stromsignalamplitudenwertes $A_h$ folgender Zusammenhang nach der Formel [5.1] ergibt:

$$\frac{1}{2} I_0 \cdot M_h^2 + A_h \cdot M_h \cdot \cos(\Delta\varphi) - (1 + V_{ref}) \cdot (1 - V_{ref}) \cdot I_0 \equiv 0 \qquad [5.1]$$

und beispielsweise nach Formel [5.2]

$$A_h \equiv M_h \qquad\qquad [5.2]$$

gesetzt, wobei $\Delta\varphi$ allgemein der Phasenunterschied zwischen den eingeprägten Schwingungen und der Spannung $V_u$ am Ausgangsanschluss A ist. Es sei darauf hingewiesen, dass das Verhältnis von $A_h$ zu $M_h$ in Formel [5.2] nur beispielhaft gewählt ist, d.h. das Verhältnis von $A_h$ zu $M_h$ kann allgemein frei gewählt werden. Zur Bestimmung des Stromsignalamplitudenwertes $A_h$ muss Formel [5.1] somit lediglich noch nach dem Stromsignalamplitudenwert $A_h$ aufgelöst werden.
Ferner wird für jeden Phasenbaustein 11 das Spannungssignal $V_A$ bezüglich der Spannung $V_u$ am Ausgangsanschluss A allgemein aus einem Spannungssignalamplitudenwert $M_h$ gebildet, vorzugsweise durch Multiplikation des

Spannungssignalamplitudenwertes $M_h$ mit einer Schwingung frei wählbarer Frequenz w und Phasenverschiebung $\varphi$, wie nachfolgende Formel verdeutlicht:

$$V_A = M_h \cdot \cos(\omega t + \varphi) \qquad\qquad [6]$$

Allgemein wird für jeden Phasenbaustein 11 der Spannungssignalamplitudenwert $M_h$ aus dem Stromistwert $i_u$ am Ausgangsanschluss A und dem Referenzsignal $V_{ref}$ gebildet, wobei vorteilhaft auf Formel [5.1] und [5.2] zurückgegriffen werden kann und zur Bestimmung des Spannungssignalamplitudenwertes $M_h$ Formel [5.1] nur noch nach dem Spannungssignalamplitudenwert $M_h$ aufgelöst werden muss.

Für jeden Phasenbaustein 11 weist das Stromsignal $V_i$ der Teilumrichtersysteme 1, 2, das Spannungssignal $V_L$ über den Induktivitäten L1, L2 und das Spannungssignal $V_A$ bezüglich der Spannung $V_u$ am Ausgangsanschluss A vorzugsweise dieselbe Frequenz w auf. Desweiteren weist für jeden Phasenbaustein 11 das Spannungssignal $V_L$ über den Induktivitäten L1, L2 und das Spannungssignal $V_A$ bezüglich der Spannung $V_u$ am Ausgangsanschluss A vorteilhaft dieselbe Phasenverschiebung $\varphi$ auf, wobei die dieselbe Phasenverschiebung $\varphi$ nicht zwingend notwendig ist.

Wie bereits eingangs erwähnt, weist die Umrichterschaltung allgemein mindestens zwei Phasenbausteine 11 auf, so dass eine mehrphasige Umrichterschaltung realisiert ist. Durch die phasengleiche Wahl der Spannungssignale $V_A$ bezüglich der Spannung $V_u$ an den Ausgangsanschlüssen A der Phasenbausteine 11 ist es nach dem erfindungsgemässen Verfahren vorteilhaft möglich, einen Gesamtausgangsstrom $i_{ug}$, beispielsweise durch eine an die Ausgangsanschlüsse A angeschlossene mehrphasige elektrische Last, mit einem reinen Gleichanteil zu erzeugen, wobei nur die eingeprägten Schwingungen die Spannungswelligkeit an den kapazitiven Energiespeichern der Schaltzellen 3 beeinflussen und die Spannungswelligkeit damit klein gehalten werden kann. Die eingeprägten Schwingungen erscheinen dann an der mehrphasigen elektrischen Last als Gleichtaktspannung. Diese Gleichtaktspannung erzeugt keine zusätzlichen Stromschwingungen, so dass besagter Gleichanteil mit Vorteil erreicht werden kann. Vorteilhaft kann die Auslegung bzw. Dimensionierung der kapazitiven Energiespeicher nur bezüglich der nun geringen Spannungswelligkeit erfolgen, d.h. unabhängig von dem gewünschten Ausgangsstrom $i_u$. Dieses Verfahren wird z.B. bei der Übermodulation eingesetzt. Im Gegensatz zur Übermodulation ist hier die Frequenz und Phasenlage der Gleichtaktspannung beliebig. Der dann mehrphasige Gesamtausgangsstrom $i_{ug}$ ist ein besagter reiner Gleichstrom, d.h. dieser weist keine Wechselanteile auf.

Der Gesamtausgangsstrom $i_{ug}$ ergibt sich demnach zu

$$i_{ug}(t) = I_0 \qquad\qquad [7],$$

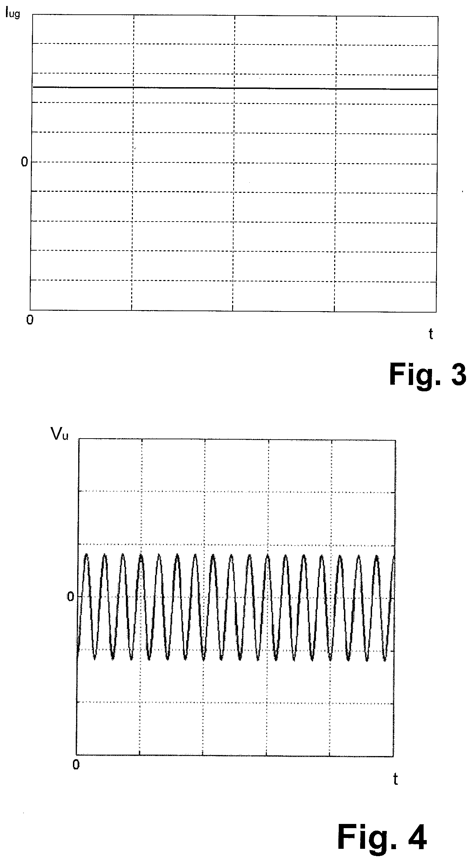

wobei $I_0$ der besagte reine Gleichanteil ist. Zur Veranschaulichung ist in Fig. 3 ein zeitlicher Verlauf eines Gesamtausgangsstromes $i_{ug}$ der Umrichterschaltung dargestellt.

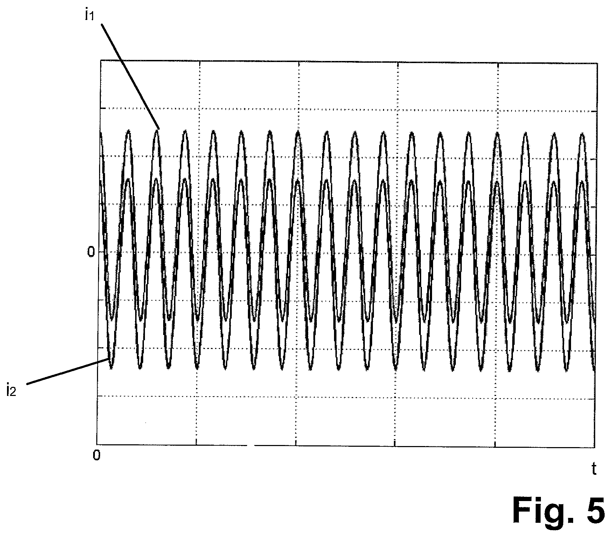

Darüber hinaus zeigt Fig. 4 einen zeitlichen Verlauf einer Spannung $V_u$ am Ausgangsanschluss A der Umrichterschaltung. In Fig. 5 ist schliesslich ein zeitlicher Verlauf des Stromes $i_1$ durch das erste Teilumrichtersystem 1 und des Stromes $i_2$ durch das zweite Teilumrichtersystem 2 gezeigt, wobei in beiden Strömen $i_1$, $i_2$ ebenfalls ein Gleichanteil und ein Wechselanteil der Frequenz w, herrührend von den vorstehend genannten eingeprägten Schwingungen, enthalten ist. Der Vollständigkeit halber sei erwähnt, dass die Ströme in den kapazitiven Energiespeichern keinen Gleichanteil und ebenfalls Wechselanteile der Frequenz w aber auch der zweifachen Frequenz w der vorstehend genannten eingeprägten Schwingungen aufweisen.

Soll der Strom $i_u$ am Ausgangsanschluss A einen gewünschten Wechselanteil $\hat{i}_u \cdot \cos(\omega_u t + \varphi_u)$ der Frequenz $\omega_u$ und eine gewünschte Phasenverschiebung $\varphi_u$ aufweisen, so ändert sich Formel [5.1] wie folgt:

$$\frac{1}{2}\hat{i}_u \cdot \cos(\omega_u t + \varphi_u) \cdot M_h^2 + A_h \cdot M_h \cos(\Delta\varphi) - (1 + V_{ref}) \cdot (1 - V_{ref}) \cdot \hat{i}_u \cdot \cos(\omega_u t + \varphi_u) \equiv 0 \quad [8],$$

wobei zur Bestimmung des Stromsignalamplitudenwertes $A_h$ dann wieder auf Formel [5.2] zurückgegriffen werden kann und der Stromsignalamplitudenwert $A_h$ und der Spannungssignalamplitudenwert $M_h$ wie vorstehend bereits beschrieben aus Formel [8] und Formel [5.2] bestimmt werden kann. Es ergibt sich der Strom $i_u$ am Ausgangsanschluss A dann in gewünschter Weise zu

$$i_u(t) = \hat{i}_u \cdot \cos(\omega_u t + \varphi_u) \qquad\qquad [9].$$

**EP 2 409 394 B1**

Die erfindungsgemässe Vorrichtung nach Fig. 1 weist eine der Erzeugung des Ansteuersignals S1 dienende erste Ansteuerschaltung 4 für jeden Phasenbaustein 11 auf, welche erste Ansteuerschaltung 4 mit den Leistungshalbleiterschaltern der Schaltzellen 3 des ersten Teilumrichtersystems 1 verbunden ist. Ferner ist eine der Erzeugung des weiteren Ansteuersignals S2 dienende zweite Ansteuerschaltung 5 für jeden Phasenbaustein 11 vorgesehen, welche zweite Ansteuerschaltung 5 mit den Leistungshalbleiterschaltern der Schaltzellen 3 des zweiten Teilumrichtersystems 2 verbunden ist. Erfindungsgemäss ist bezüglich eines jeden Phasenbausteins 11 der ersten Ansteuerschaltung 4 zur Bildung des Ansteuersignals S1 die Summe aus dem Spannungssignal $V_L$ über den Induktivitäten L1, L2 und der Schaltfunktion $\alpha_1$ für die Leistungshalbleiterschalter der Schaltzellen 3 des ersten Teilumrichtersystems 1 zugeführt. Der zweiten Ansteuerschaltung 5 zur Bildung des weiteren Ansteuersignals S2 ist bezüglich eines jeden Phasenbausteins 11 die Summe aus dem Spannungssignal $V_L$ über den Induktivitäten L1, L2 und der Schaltfunktion $\alpha_2$ für die Leistungshalbleiterschalter der Schaltzellen 3 des zweiten Teilumrichtersystems 2 zugeführt. Zur Bildung des Ansteuersignals S1 und des weiteren Ansteuersignals S2 dient beispielsweise jeweils eine Zuordnungstabelle (look-up table) in der ersten und zweiten Ansteuerschaltung 4, 5, bei welcher der Schaltfunktion $\alpha_1$ entsprechende Ansteuersignale S1 und bei welcher der Schaltfunktion $\alpha_2$ entsprechende weiter Ansteuersignale S2 fest zugeordnet sind, oder beispielsweise jeweils ein Modulator, welcher auf einem Verfahren der Pulsweitenmodulation basiert. Weiterhin ist bezüglich eines jeden Phasenbausteins 11 eine erste Berechnungseinheit 6 zur Bildung der Schaltfunktionen $\alpha_1$, $\alpha_2$ mittels Berechnung gemäss Formel [1] und [2] aus dem Spannungssignal $V_A$ bezüglich der Spannung $V_u$ am Ausgangsanschluss A und einem wählbaren Referenzsignal $V_{ref}$ vorgesehen, wobei die Spannungssignale $V_A$ bezüglich der Spannung $V_u$ an den Ausgangsanschlüssen A der Phasenbausteine 11 phasengleich gewählt sind.

Gemäss Fig. 2 ist bezüglich eines jeden Phasenbausteins 11 eine zweite Berechnungseinheit 10 zur Bildung des Spannungssignals $V_L$ über den Induktivitäten L1, L2 aus einem Stromsignal $V_i$ der Teilumrichtersysteme 1, 2 vorgesehen, wobei die zweite Berechnungseinheit 10 die Bildung des Spannungssignals $V_L$ über den Induktivitäten L1, L2 durch Berechnung mittels der Formel [3] durchführt.

Desweiteren ist bezüglich eines jeden Phasenbausteins 11 eine dritte Berechnungseinheit 7 zur Bildung des Stromsignals $V_i$ der Teilumrichtersysteme 1, 2 aus einem Stromsignalamplitudenwert $A_h$ vorgesehen, die die Bildung des Stromsignals $V_i$ der Teilumrichtersysteme 1, 2 mittels Berechnung nach der Formel [4] ausführt.

Darüber hinaus ist bezüglich eines jeden Phasenbausteins 11 eine vierte Berechnungseinheit 9 zur Bildung des Stromsignalamplitudenwertes $A_h$ aus dem Stromistwert $i_u$ am Ausgangsanschluss A und dem Referenzsignal $V_{ref}$ vorgesehen, wobei die vierte Berechnungseinheit 9 die Bildung des Stromsignalamplitudenwertes $A_h$ durch Berechnung gemäss den Formeln [5.1] und [5.2] bzw. gemäss den Formeln [8] und [5.2] durchführt.

Eine bezüglich eines jeden Phasenbausteins 11 vorgesehene fünfte Berechnungseinheit 8 dient der Bildung des Spannungssignals $V_A$ bezüglich der Spannung $V_u$ am Ausgangsanschluss A aus einem Spannungssignalamplitudenwert $M_h$, wobei die fünfte Berechnungseinheit 8 die der Bildung des Spannungssignals $V_A$ bezüglich der Spannung $V_u$ am Ausgangsanschluss A durch Berechnung nach Formel [6] ausführt.

Die bereits erwähnte vierte Berechnungseinheit 9 dient ebenfalls zur Bildung des Spannungssignalamplitudenwertes $M_h$ aus dem Stromistwert $i_u$ am Ausgangsanschluss A und dem Referenzsignal $V_{ref}$, wobei die vierte Berechnungseinheit 9 die Bildung des Spannungssignalamplitudenwertes $M_h$ durch Berechnung nach den Formeln [5.1] und [5.2] bzw. gemäss den Formeln [8] und [5.2] durchführt.

Insgesamt konnte gezeigt werden, dass die, insbesondere in Fig. 2 gezeigte, erfindungsgemässe Vorrichtung zur Durchführung des erfindungsgemässen Verfahrens zum Betrieb der Umrichterschaltung sehr einfach und kostengünstig realisiert werden kann, da der Schaltungsaufwand äusserst gering ist und zudem nur eine geringe Anzahl an Bauelementen für den Aufbau benötigt wird. Somit ist mit dieser Vorrichtung das erfindungsgemässe Verfahren besonders einfach durchführbar.

**Bezugszeichenliste**

1   erstes Teilumrichtersystem
2   zweites Teilumrichtersystem
3   Schaltzelle
4   erste Ansteuerschaltung
5   zweite Ansteuerschaltung
6   erste Berechnungseinheit
7   dritte Berechnungseinheit
8   fünfte Berechnungseinheit
9   vierte Berechnungseinheit
10  zweite Berechnungseinheit

11    Phasenbaustein

**Patentansprüche**

**1.** Verfahren zum Betrieb einer Umrichterschaltung, wobei die Umrichterschaltung mindestens zwei Phasenbausteine (11) aufweist, wobei jeder Phasenbaustein (11) ein erstes und ein zweites Teilumrichtersystem (1) aufweist, für jeden Phasenbaustein (11) die Teilumrichtersysteme (2) seriell miteinander verbunden sind, der Verbindungspunkt der beiden Teilumrichtersysteme (1, 2) einen Ausgangsanschluss (A) bildet, jedes Teilumrichtersystem (1, 2) eine Induktivität (L1, L2) und mindestens eine dazu seriell geschaltete zweipolige Schaltzelle (3) umfasst und jede Schaltzelle (3) zwei in Serie geschaltete ansteuerbare bidirektionale Leistungshalbleiterschalter mit gesteuerter unidirektionaler Stromführungsrichtung und einen zu der Serienschaltung der Leistungshalbleiterschalter parallel geschalteten kapazitiven Energiespeicher aufweist,

bei dem die Leistungshalbleiterschalter der Schaltzellen (3) des ersten Teilumrichtersystems (1) mittels eines Ansteuersignals (S1) und die Leistungshalbleiterschalter der Schaltzellen (3) des zweiten Teilumrichtersystems (2) mittels eines weiteren Ansteuersignals (S2) angesteuert werden,

dass für jeden Phasenbaustein (11) das Ansteuersignal (S1) aus einer Schaltfunktionen ($\alpha_1$) für die Leistungshalbleiterschalter der Schaltzellen (3) des ersten Teilumrichtersystems (1) gebildet wird,

dass das weitere Ansteuersignal (S2) aus einer Schaltfunktionen ($\alpha_2$) für die Leistungshalbleiterschalter der Schaltzellen (3) des zweiten Teilumrichtersystems (2) gebildet wird,

dass die Schaltfunktionen ($\alpha_1$, $\alpha_2$) mittels eines Spannungssignals ($V_A$) bezüglich der Spannung ($V_u$) am Ausgangsanschluss (A) des zugehörigen Phasebausteins (11) und einem wählbaren Referenzsignal ($V_{ref}$) gebildet werden, wobei die Spannungssignale ($V_A$) bezüglich der Spannung ($V_u$) an den Ausgangsanschlüssen (A) der Phasenbausteine (11) phasengleich gewählt werden,

**dadurch gekennzeichnet, dass** für jeden Phasenbaustein (11) das Ansteuersignal (S1) und das weitere Ansteuersignal (S2) zusätzlich aus einem Spannungssignal ($V_L$) über den Induktivitäten (L1, L2) gebildet werden,

dass für jeden Phasenbaustein (11) das Spannungssignal ($V_L$) über den Induktivitäten (L1, L2) aus einem Stromsignal ($V_i$) der Teilumrichtersysteme (1, 2) gebildet wird,

dass für jeden Phasenbaustein (11) das Stromsignal ($V_i$) der Teilumrichtersysteme (1, 2) aus einem Stromsignalamplitudenwert ($A_h$) gebildet wird,

dass für jeden Phasenbaustein (11) <u>für den Gleichstrombetrieb</u> der Stromsignalamplitudenwert ($A_h$) aus dem Stromistwert ($i_u$) am Ausgangsanschluss (A) und dem Referenzsignal ($V_{ref}$) gemäss der Formel

$$\frac{1}{2} I_0 \cdot M_h{}^2 + A_h \cdot M_h \cdot \cos(\Delta\varphi) - (1 + V_{ref}) \cdot (1 - V_{ref}) \cdot I_0 \equiv 0$$

mit $A_h \equiv M_h$

gebildet wird, wobei $I_0$ ein Gleichstromanteil des Stromistwertes ($i_u$) am Ausgangsanschluss (A) ist, $M_h$ ein Spannungssignalamplitudenwert ist und $\Delta\varphi$ der Phasenunterschied zwischen dem Stromsignal ($V_i$) der Teilumrichtersysteme (1, 2) und der Spannung ($V_u$) am Ausgangsanschluss A ist, <u>und</u>

dass für jeden Phasenbaustein (11) für Wechselstrombetrieb der Stromsignalamplitudenwert ($A_h$) aus dem Stromistwert ($i_u$) am Ausgangsanschluss (A) und dem Referenzsignal ($V_{ref}$) gemäss der Formel

$$\frac{1}{2} \hat{i}_u \cdot \cos(\omega_u t + \varphi_u) \cdot M_h{}^2 + A_h \cdot M_h \cos(\Delta\varphi) - (1 + V_{ref}) \cdot (1 - V_{ref}) \cdot \hat{i}_u \cdot \cos(\omega_u t + \varphi_u) \equiv 0$$

<u>mit $A_h \equiv M_h$</u>
<u>gebildet wird, wobei $\hat{i}_u$ der Amplitudenwert des Stromistwertes ($i_u$), $\omega_u$ die Frequenz des Stromistwertes ($i_u$) und $\varphi_u$ die Phasenverschiebung des Stromistwertes ($i_u$) ist.</u>

**2.** Verfahren nach Anspruch 1, **dadurch gekennzeichnet, dass** für jeden Phasenbaustein (11) das Spannungssignal ($V_A$) bezüglich der Spannung ($V_u$) am Ausgangsanschluss (A) aus dem Spannungssignalamplitudenwert ($M_h$) gebildet wird.

**3.** Verfahren nach Anspruch 2, **dadurch gekennzeichnet, dass** für jeden Phasenbaustein (11) der Spannungssignalamplitudenwert ($M_h$) aus dem Stromistwert ($i_u$) am Ausgangsanschluss (A) und dem Referenzsignal ($V_{ref}$) gebildet wird.

4. Verfahren nach Anspruch 1, **dadurch gekennzeichnet, dass** für jeden Phasenbaustein (11) das Stromsignal ($V_i$) der Teilumrichtersysteme (1, 2), das Spannungssignal ($V_L$) über den Induktivitäten (L1, L2) und das Spannungssignal ($V_A$) bezüglich der Spannung ($V_u$) am Ausgangsanschluss (A) dieselbe Frequenz aufweist.

5. Verfahren nach Anspruch 1 oder 4, **dadurch gekennzeichnet, dass** für jeden Phasenbaustein (11) das Spannungssignal ($V_L$) über den Induktivitäten (L1, L2) und das Spannungssignal ($V_A$) bezüglich der Spannung ($V_u$) am Ausgangsanschluss (A) dieselbe Phasenverschiebung aufweist.

6. Verfahren nach einem der vorhergehenden Ansprüche 1 bis 5, **dadurch gekennzeichnet, dass** für jeden Phasenbaustein (11) als Referenzsignal ($V_{ref}$) ein Referenzspannungssignal bezüglich der Spannung ($V_u$) am Ausgangsanschluss (A) gewählt wird.

7. Vorrichtung zur Durchführung eines Verfahrens zum Betrieb einer Umrichterschaltung, wobei die Umrichterschaltung mindestens zwei Phasenbausteine (11) aufweist und jeder Phasenbausteine (11) ein erstes und ein zweites Teilumrichtersystem (1) umfasst, für jeden Phasenbaustein (11) die Teilumrichtersysteme (2) seriell miteinander verbunden sind, der Verbindungspunkt der beiden Teilumrichtersysteme (1, 2) einen Ausgangsanschluss (A) bildet, jedes Teilumrichtersystem (1, 2) eine Induktivität (L1, L2) und mindestens eine dazu seriell geschaltete zweipolige Schaltzelle (3) umfasst und jede Schaltzelle (3) zwei in Serie geschaltete ansteuerbare bidirektionale Leistungshalbleiterschalter mit gesteuerter unidirektionaler Stromführungsrichtung und einen zu der Serienschaltung der Leistungshalbleiterschalter parallel geschalteten kapazitiven Energiespeicher aufweist, mit einer der Erzeugung eines Ansteuersignals (S1) dienenden ersten Ansteuerschaltung (4) für jeden Phasenbaustein (11), welche erste Ansteuerschaltung (4) mit den Leistungshalbleiterschaltern der Schaltzellen (3) des ersten Teilumrichtersystems (1) verbunden ist, und mit einer der Erzeugung eines weiteren Ansteuersignals (S2) dienenden zweiten Ansteuerschaltung (5) für jeden Phasenbaustein (11), welche zweite Ansteuerschaltung (5) mit den Leistungshalbleiterschaltern der Schaltzellen (3) des zweiten Teilumrichtersystems (2) verbunden ist,
**dadurch gekennzeichnet,**
**dass** bezüglich eines jeden Phasenbausteins (11) der ersten Ansteuerschaltung (4) zur Bildung des Ansteuersignals (S1) die Summe aus einem Spannungssignal ($V_L$) über den Induktivitäten (L1, L2) und einer Schaltfunktion ($\alpha_1$) für die Leistungshalbleiterschalter der Schaltzellen (3) des ersten Teilumrichtersystems (1) zugeführt ist,
**dass** bezüglich eines jeden Phasenbausteins (11) der zweiten Ansteuerschaltung (5) zur Bildung des weiteren Ansteuersignals (S2) die Summe aus dem Spannungssignal ($V_L$) über den Induktivitäten (L1, L2) und einer Schaltfunktion ($\alpha_2$) für die Leistungshalbleiterschalter der Schaltzellen (3) des zweiten Teilumrichtersystems (2) zugeführt ist,
**dass** bezüglich eines jeden Phasenbausteins (11) eine erste Berechnungseinheit (6) zur Bildung der Schaltfunktionen ($\alpha_1$, $\alpha_2$) aus einem Spannungssignal ($V_A$) bezüglich der Spannung ($V_u$) am Ausgangsanschluss (A) und einem wählbaren Referenzsignal ($V_{ref}$) vorgesehen ist, wobei die Spannungssignale ($V_A$) bezüglich der Spannung ($V_u$) an den Ausgangsanschlüssen (A) der Phasenbausteine (11) phasengleich gewählt sind,
**dass** bezüglich eines jeden Phasenbausteins (11) eine zweite Berechnungseinheit (10) zur Bildung des Spannungssignals ($V_L$) über den Induktivitäten (L1, L2) aus einem Stromsignal ($V_i$) der Teilumrichtersysteme (1, 2) vorgesehen ist,
**dass** bezüglich eines jeden Phasenbausteins (11) eine dritte Berechnungseinheit (7) zur Bildung des Stromsignals ($V_i$) der Teilumrichtersysteme (1, 2) aus einem Stromsignalamplitudenwert ($A_h$) vorgesehen ist,
**dass** bezüglich eines jeden Phasenbausteins (11) eine vierte Berechnungseinheit (9) <u>für den Gleichstrombetrieb</u> zur Bildung des Stromsignalamplitudenwertes ($A_h$) aus dem Stromistwert ($i_u$) am Ausgangsanschluss (A) und dem Referenzsignal ($V_{ref}$) gemäss der Formel

$$\frac{1}{2}I_0 \cdot M_h{}^2 + A_h \cdot M_h \cdot \cos(\Delta\varphi) - (1 + V_{ref}) \cdot (1 - V_{ref}) \cdot I_0 \equiv 0$$

mit $A_h \equiv M_h$
vorgesehen ist, wobei $I_0$ ein Gleichstromanteil des Stromistwertes ($i_u$) am Ausgangsanschluss (A) ist, $M_h$ ein Spannungssignalamplitudenwert ist und $\Delta\varphi$ der Phasenunterschied zwischen dem Stromsignal ($V_i$) der Teilumrichtersysteme (1, 2) und der Spannung ($V_u$) am Ausgangsanschluss A ist, <u>und</u>
**dass** bezüglich eines jeden Phasenbausteins (11) die vierte Berechnungseinheit (9) für den Wechselstrombetrieb zur Bildung des Stromsignalamplitudenwertes ($A_h$) aus dem Stromistwert ($i_u$) am Ausgangsanschluss (A) und dem Referenzsignal ($V_{ref}$) gemäss der Formel

$$\frac{1}{2}\hat{i}_u \cdot \cos(\omega_u t + \varphi_u) \cdot M_h^2 + A_h \cdot M_h \cos(\Delta\varphi) - (1 + V_{ref}) \cdot (1 - V_{ref}) \cdot \hat{i}_u \cdot \cos(\omega_u t + \varphi_u) \equiv 0$$

mit $A_h \equiv M_h$ vorgesehen ist, wobei $\hat{i}_u$ der Amplitudenwert des Stromistwertes ($i_u$), $\omega_u$ die Frequenz des Strom istwertes ($i_u$) und $\varphi_u$ die Phasenverschiebung des Stromistwertes ($i_u$) ist.

8. Vorrichtung nach Anspruch 7, **dadurch gekennzeichnet, dass** bezüglich eines jeden Phasenbausteins (11) einen fünfte Berechnungseinheit (8) zur Bildung des Spannungssignals ($V_A$) bezüglich der Spannung ($V_u$) am Ausgangsanschluss (A) aus einem Spannungssignalamplitudenwert ($M_n$) vorgesehen ist.

9. Vorrichtung nach Anspruch 8, **dadurch gekennzeichnet, dass** bezüglich eines jeden Phasenbausteins (11) die vierte Berechnungseinheit (9) zur Bildung des Spannungssignalamplitudenwertes ($M_h$) aus dem Stromistwert ($i_u$) am Ausgangsanschluss (A) und dem Referenzsignal ($V_{ref}$) vorgesehen ist.

## Claims

1. Method for operating a converter circuit, the converter circuit having at least two phase modules (11), each phase module (11) having a first and a second subconverter system (1), the subconverter systems (2) being connected in series with one another for each phase module (11), the node between the two subconverter systems (1, 2) forming an output connection (A), each subconverter system (1, 2) comprising an inductance (L1, L2) and at least one two-pole switching cell (3), which is connected in series with said inductance, and each switching cell (3) having two drivable bidirectional power semiconductor switches, which are connected in series with a controlled unidirectional current guidance direction and a capacitive energy store, which is connected in parallel with the series circuit comprising the power semiconductor switches, in which the power semiconductor switches of the switching cells (3) of the first subconverter system (1) are driven by means of a drive signal (S1), and the power semiconductor switches of the switching cells (3) of the second subconverter system (2) are driven by means of a further drive signal (S2),
that, for each phase module (11), the drive signal (S1) is formed from a switching function ($\alpha_1$) for the power semiconductor switches of the switching cells (3) of the first subconverter system (1), that the further drive signal (S2) is formed from a switching function ($\alpha_2$) for the power semiconductor switches of the switching cells (3) of the second subconverter system (2),
that the switching functions ($\alpha_1$, $\alpha_2$) are formed by means of a voltage signal ($V_A$) with respect to the voltage ($V_u$) at the output connection (A) of the associated phase module (11) and a selectable reference signal ($V_{ref}$), the voltage signals ($V_A$) being selected so as to be in phase with the voltage ($V_u$) at the output connections (A) of the phase modules (11),
**characterized in that**, for each phase module (11), the drive signal (S1) and the further drive signal (S2) are additionally formed from a voltage signal ($V_L$) across the inductances (L1, L2),
**in that**, for each phase module (11), the voltage signal ($V_L$) across the inductances (L1, L2) is formed from a current signal ($V_i$) of the subconverter systems (1, 2),
**in that**, for each phase module (11), the current signal ($V_i$) of the subconverter systems (1, 2) is formed from a current signal amplitude value ($A_h$), **in that**, for each phase module (11) for direct current operation, the current signal amplitude value ($A_h$) is formed from the actual current value ($i_u$) at the output connection (A) and the reference signal ($V_{ref}$) in accordance with formula

$$\frac{1}{2}I_0 \cdot M_h^2 + A_h \cdot M_h \cdot \cos(\Delta\varphi) - (1 + V_{ref}) \cdot (1 - V_{ref}) \cdot I_0 \equiv 0$$

where $A_h \equiv M_h$,
wherein $I_0$ is a DC component of the actual current value ($i_u$) at the output connection (A), $M_h$ is a voltage signal amplitude value, and $\Delta\varphi$ is the phase difference between the current signal ($V_i$) of the subconverter systems (1, 2) and the voltage ($V_u$) at the output connection A, and
**in that**, for each phase module (11) for alternating current operation, the current signal amplitude value ($A_h$), is formed from the actual current value ($i_u$), at the output connection (A) and the reference signal ($V_{ref}$) in accordance with the formula

$$\frac{1}{2}\hat{i}_u \cdot \cos(\omega_u t + \varphi_u) \cdot M_h^2 + A_h \cdot M_h \cos(\Delta\varphi) - (1 + V_{ref}) \cdot (1 - V_{ref}) \cdot \hat{i}_u \cdot \cos(\omega_u t + \varphi_u) \equiv 0$$

where $A_h \equiv M_h$,
wherein $\hat{i}_u$ is the amplitude value of the actual current value ($i_u$), $\omega_u$ is the frequency of the actual current value ($i_u$) and $\varphi_u$ is the phase shift of the actual current value ($i_u$).

2. Method according to Claim 1, **characterized in that**, for each phase module (11), the voltage signal ($V_A$) with respect to the voltage ($V_u$) at the output connection (A) is formed from the voltage signal amplitude value ($M_h$).

3. Method according to Claim 2, **characterized in that**, for each phase module (11), the voltage signal amplitude value ($M_h$) is formed from the actual current value ($i_u$) at the output connection (A) and the reference signal ($V_{ref}$).

4. Method according to Claim 1, **characterized in that**, for each phase module (11), the current signal ($V_i$) of the subconverter systems (1, 2), the voltage signal ($V_L$) across the inductances (L1, L2) and the voltage signal ($V_A$) with respect to the voltage ($V_u$) at the output connection (A) has the same frequency.

5. Method according to Claim 1 or 4, **characterized in that**, for each phase module (11), the voltage signal ($V_L$) across the inductances (L1, L2) and the voltage signal ($V_A$) with respect to the voltage ($V_u$) at the output connection (A) has the same phase shift.

6. Method according to one of the preceding Claims 1 to 5, **characterized in that**, for each phase module (11), a reference voltage signal with respect to the voltage ($V_u$) at the output connection (A) is selected as reference signal ($V_{ref}$).

7. Apparatus for implementing a method for operating a converter circuit, the converter circuit having at least two phase modules (11), and each phase module (11) comprising a first and a second subconverter system (1), the subconverter systems (2) being connected in series with one another for each phase module (11), the node between the two subconverter systems (1, 2) forming an output connection (A), each subconverter system (1, 2) comprising an inductance (L1, L2) and at least one two-pole switching cell (3), which is connected in series with said inductance, and each switching cell (3) having two drivable bidirectional power semiconductor switches, which are connected in series, with a controlled unidirectional current guidance direction and a capacitive energy store, which is connected in parallel with the series circuit comprising the power semiconductor switches,
with a first drive circuit (4), used for producing a drive signal (S1), for each phase module (11), which first drive circuit (4) is connected to the power semiconductor switches of the switching cells (3) of the first subconverter system (1), and with a second drive circuit (5) used for producing a further drive signal (S2), for each phase module (11), which second drive circuit (5) is connected to the power semiconductor switches of the switching cells (3) of the second subconverter system (2), **characterized in that**, with respect to each phase module (11), the sum of a voltage signal ($V_L$) across the inductances (L1, L2) and a switching function ($\alpha_1$) for the power semiconductor switches of the switching cells (3) of the first subconverter system (1) is supplied to the first drive circuit (4) in order to form the drive signal (S1),
**in that**, with respect to each phase module (11), the sum of the voltage signal (($V_L$) across the inductances (L1, L2) and a switching function ($\alpha_2$) for the power semiconductor switches of the switching cells (3) of the second subconverter system (2) is supplied to the second drive circuit (5) in order to form the further drive signal (S2), in that, with respect to each phase module (11), a first computation unit (6) for forming the switching functions ($\alpha_1$, $\alpha_2$) from a voltage signal ($V_A$) with respect to the voltage ($V_u$) at the output connection (A) and a selectable reference signal ($V_{ref}$) is provided, the voltage signals ($V_A$) with respect to the voltage ($V_u$) at the output connections (A) of the phase modules (11) being selected to be in phase,
**in that**, with respect to each phase module (11), a second computation unit (10) for forming the voltage signal ($V_L$) across the inductances (L1, L2) from a current signal ($V_i$) of the subconverter systems (1, 2) is provided,
**in that**, with respect to each phase module (11), a third computation unit (7) for forming the current signal ($V_i$) of the subconverter systems (1, 2) from a current signal amplitude value ($A_h$) is provided, in that, with respect to each phase module (11), a fourth computation unit (9) for direct current operation is provided for forming the current signal amplitude value ($A_h$) from the actual current value ($i_u$) at the output connection (A) and the reference signal ($V_{ref}$) in accordance with formula

$$\frac{1}{2}I_0 \cdot M_h^2 + A_h \cdot M_h \cdot \cos(\Delta\varphi) - (1 + V_{ref}) \cdot (1 - V_{ref}) \cdot I_0 \equiv 0$$

where $A_h \equiv M_h$,

wherein $I_0$ is a DC component of the actual current value ($i_u$) at the output connection (A), $M_h$ is a voltage signal amplitude value, and $\Delta\varphi$ is the phase difference between the current signal ($V_i$) of the subconverter systems (1, 2) and the voltage ($V_u$) at the output connection A, and

**in that**, with respect to each phase module (11), the fourth computation unit (9) for alternating current operation is provided for forming the current signal amplitude value ($A_h$), from the actual current value ($i_u$), at the output connection (A) and the reference signal ($V_{ref}$) in accordance with the formula

$$\frac{1}{2}\hat{i}_u \cdot \cos(\omega_u t + \varphi_u) \cdot M_h^2 + A_h \cdot M_h \cos(\Delta\varphi) - (1 + V_{ref}) \cdot (1 - V_{ref}) \cdot \hat{i}_u \cdot \cos(\omega_u t + \varphi_u) \equiv 0$$

where $A_h \equiv M_h$,

wherein $\hat{i}_u$ is the amplitude value of the actual current value ($i_u$), $\omega_u$ is the frequency of the actual current value ($i_u$) and $\varphi_u$ is the phase shift of the actual current value ($i_u$).

8. Apparatus according to Claim 7, **characterized in that**, with respect to each phase module (11), a fifth computation unit (8) for forming the voltage signal ($V_A$) with respect to the voltage ($V_u$) at the output connection (A) from a voltage signal amplitude value ($M_h$) is provided.

9. Apparatus according to Claim 8, **characterized in that**, with respect to each phase module (11), the fourth computation unit (9) for forming the voltage signal amplitude value ($M_h$) from the actual current value ($i_u$) at the output connection (A) and the reference signal ($V_{ref}$) is provided.


**Revendications**

1. Procédé de conduite d'un circuit convertisseur, dans lequel
le circuit convertisseur présente au moins deux modules de phase (11),
chaque module de phase (11) présente un premier et un deuxième système partiel de convertisseur (1),
les systèmes partiels de convertisseur (2) sont raccordés l'un à l'autre en série dans chaque module de phase (11),
le point de raccordement des deux systèmes partiels de convertisseur (1, 2) forme une borne de raccordement de sortie (A),
chaque système partiel de convertisseur (1, 2) comprend une inductance (L1, L2) et au moins une cellule de commutation bipolaire (3) raccordée en série aux inductances,
chaque cellule de commutation (3) présente deux commutateurs semi-conducteurs de puissance bidirectionnels et asservis, raccordés en série, une direction unidirectionnelle asservie de passage du courant et un accumulateur capacitif d'énergie raccordé en parallèle au circuit série des commutateurs semi-conducteurs de puissance,
les commutateurs semi-conducteurs de puissance des cellules de commutation (3) du premier système partiel de convertisseur (1) sont commandés au moyen d'un signal de commande (S1) et les commutateurs semi-conducteurs de puissance des cellules de commutation (3) du deuxième système partiel de convertisseur (2) sont commandés au moyen d'un autre signal de commande (S2),
pour chaque module de phase (11), le signal de commande (S1) est formé par une fonction de commutation ($\alpha_1$) pour le commutateur semi-conducteur de puissance des cellules de commutation (3) du premier système partiel de convertisseur (1),
l'autre signal de commande (S2) est formé d'une fonction de commutation ($\alpha_2$) pour les commutateurs semi-conducteurs de puissance des cellules de commutation (3) du deuxième système partiel de convertisseur (2),
les fonctions de commutation ($\alpha_1$, $\alpha_2$) sont formées d'un signal de tension ($V_A$) par rapport la tension ($V_u$) appliquée sur la borne de raccordement de sortie (A) du module de phase (11) associé et d'un signal de référence ($V_{ref}$) apte à être sélectionné et
les signaux de tension ($V_A$) sont sélectionnés par rapport à la tension ($V_u$) appliquée sur les bornes de raccordement de sortie (A) des modules de phase (11) à phase identique,
**caractérisé en ce que**
pour chaque module de phase (11), le signal de commande (S1) et l'autre signal de commande (S2) sont de plus formés d'un signal de tension ($V_L$) aux bornes des inductances (L1, L2),

**en ce que** pour chaque module de phase (11), le signal de tension ($V_L$) aux bornes des inductances (L1, L2) est formé d'un signal de courant ($V_i$) des systèmes partiels de convertisseur (1, 2),

**en ce que** pour chaque module de phase (11), le signal de courant ($V_i$) des systèmes partiels de convertisseur (1, 2) est formé d'une valeur ($A_h$) d'amplitude du signal de courant,

**en ce que** pour chaque module de phase (11), pour le fonctionnement en courant continu, la valeur d'amplitude ($A_h$) du signal de courant est formée de la valeur effective du courant ($\underline{i_u}$) à la borne de raccordement de sortie (A) et du signal de référence ($V_{ref}$) selon la formule

$$\frac{1}{2} I_0 \cdot M_h{}^2 + A_h \cdot M_h \cdot \cos(\Delta\varphi) - (1 + V_{ref}) \cdot (1 - V_{ref}) \cdot I_0 \equiv 0$$

avec $A_h = M_h$

$I_0$ étant la fraction courant continu de la valeur effective du courant ($\underline{i_u}$) sur la borne de raccordement de sortie (A), $M_h$ une valeur d'amplitude du signal de tension et $\Delta\varphi$ le déphasage entre le signal de courant ($V_i$) des systèmes partiels de convertisseur (1, 2) et la tension ($V_u$) sur la borne de raccordement de sortie A et

**en ce que** pour chaque module de phase (11), en fonctionnement en courant alternatif, la valeur ($A_h$) du signal d'amplitude du signal de courant est formée de la valeur effective du courant ($\underline{i_u}$) à la borne de raccordement de sortie (A) et le signal de référence ($V_{ref}$), selon la formule

$$\frac{1}{2} \hat{i}_u \cdot \cos(\omega_u t + \varphi_u) \cdot M_h{}^2 + A_h \cdot M_h \cos(\Delta\varphi) - (1 + V_{ref}) \cdot (1 - V_{ref}) \cdot \hat{i}_u \cdot \cos(\omega_u t + \varphi_u) \equiv 0$$

avec $A_h \equiv M_h$

$\hat{i}_u$ étant la valeur d'amplitude de la valeur effective de courant ($i_u$), $\omega_u$ étant la fréquence de la valeur effective de courant ($\underline{i_u}$) $\varphi_u$ étant le déphasage de la valeur effective de courant ($i_u$).

2. Procédé selon la revendication 1, **caractérisé en ce que** pour chaque module de phase (11), le signal de tension ($V_A$) par rapport à la tension ($V_u$) à la borne de raccordement de sortie (A) est formé de la valeur ($M_h$) d'amplitude du signal de tension.

3. Procédé selon la revendication 2, **caractérisé en ce que** pour chaque module de phase (11), la valeur ($M_h$) d'amplitude du signal de tension est formée de la valeur effective de courant ($i_u$) sur la borne de raccordement de sortie (A) et du signal de référence ($V_{ref}$).

4. Procédé selon la revendication 1, **caractérisé en ce que** pour chaque module de phase (11), le signal de courant ($V_i$) des systèmes partiels de convertisseur (1, 2) présente le signal de tension ($V_L$) aux bornes des inductances (L1, L2) et le signal de tension ($V_A$) par rapport à la tension ($V_u$) sur les bornes de raccordement de sortie (A), la même fréquence.

5. Procédé selon les revendications 1 ou 4, **caractérisé en ce que** pour chaque module de phase (11), le signal de tension ($V_L$) aux bornes des inductances (L1, L2) et le signal de tension ($V_A$) par rapport à la tension ($V_u$) sur la borne de raccordement de sortie (A) présentent le même déphasage.

6. Procédé selon l'une des revendications 1 à 5, **caractérisé en ce que** pour chaque module de phase (11), comme signal de référence ($V_{ref}$) est sélectionné un signal de tension et de référence par rapport à la tension ($V_u$) sur la borne de raccordement de sortie (A).

7. Ensemble en vue de la mise en oeuvre d'un procédé de conduite d'un circuit convertisseur, dans lequel le circuit convertisseur présente au moins deux modules de phase (11),
chaque module de phase (11) présente un premier et un deuxième système partiel de convertisseur (1),
les systèmes partiels de convertisseur (2) sont raccordés l'un à l'autre en série dans chaque module de phase (11),
le point de raccordement des deux systèmes partiels de convertisseur (1, 2) forme une borne de raccordement de sortie (A),
chaque système partiel de convertisseur (1, 2) comprend une inductance (L1, L2) et au moins une cellule de commutation bipolaire (3) raccordée en série aux inductances,

chaque cellule de commutation (3) présente deux commutateurs semi-conducteurs de puissance bidirectionnels et asservis, raccordés en série, une direction unidirectionnelle asservie de passage du courant et un accumulateur capacitif d'énergie raccordé en parallèle au circuit série des commutateurs semi-conducteurs de puissance, un premier circuit de commande (4) servant à former un signal de commande (S1) pour chaque module de phase (11), le premier circuit de commande (4) étant raccordé aux commutateurs semi-conducteurs de puissance des cellules de commutation (3) du premier système partiel de convertisseur (1) et un deuxième circuit de commande (5) servant à former un signal de commande (S2) pour chaque module de phase (11), le deuxième circuit de commande (5) étant raccordé commutateurs semi-conducteurs de puissance des cellules de commutation (3) du deuxième système partiel de convertisseur (2),

**caractérisé en ce que**

pour chaque module de phase (11), la somme d'un signal de tension ($V_L$) aux bornes des inductances (L1, L2) et d'une fonction de commutation ($\alpha_1$) pour les commutateurs semi-conducteurs de puissance des cellules de commutation (3) du premier système partiel de convertisseur (1) est apportée au premier circuit de commande (4) pour former le signal de commande (S1), pour chaque module de phase (11), la somme du signal de tension ($V_L$) aux bornes des inductances (L1, L2) et d'une fonction de commutation ($\alpha_2$) pour les commutateurs semi-conducteurs de puissance des cellules de commutation (3) du deuxième système partiel de convertisseur (2) est apportée au deuxième circuit de commande (5) pour former l'autre signal de commande (S2),

**en ce que** pour chaque module de phase (11), une première unité de calcul (6) est prévue pour former les fonctions de commutation ($\alpha_1$, $\alpha_2$) à partir d'un signal de tension ($V_A$) par rapport à la tension ($V_u$) à la borne de raccordement (A) et d'un signal de référence ($V_{ref}$) apte à être sélectionné, les signaux de tension ($V_A$) sélectionnés par rapport à la tension ($V_u$) aux bornes de raccordement (A) des modules de phase (11) ayant la même phase,

**en ce que** pour chaque module de phase (11), une deuxième unité de calcul (10) est prévue pour former le signal ($V_L$) de tension aux bornes des inductances (L1, L2) à partir d'un signal de courant ($V_i$) des systèmes partiels de convertisseur (1, 2),

**en ce que** pour chaque module de phase (11), une troisième unité de calcul (7) est prévue pour former le signal de courant ($V_i$) des systèmes partiels de convertisseur (1, 2) à partir d'une valeur ($A_h$) d'amplitude du signal de courant,

**en ce que** pour chaque module de phase (11), une quatrième unité de calcul (9) est prévue pour, en fonctionnement sur courant continu, former la valeur d'amplitude ($A_h$) du signal de courant à partir de la valeur effective du courant ($\underline{i_u}$) à la borne de raccordement de sortie (A) et du signal de référence ($V_{ref}$) selon la formule

$$\frac{1}{2} I_0 \cdot M_h{}^2 + A_h \cdot M_h \cdot \cos(\Delta\varphi) - (1 + V_{ref}) \cdot (1 - V_{ref}) \cdot I_0 \equiv 0$$

avec $A_h = M_h$
$I_0$ étant la fraction courant continu de la valeur effective du courant ($\underline{i_u}$) sur la borne de raccordement de sortie (A), $M_h$ une valeur d'amplitude du signal de tension et $\Delta\varphi$ le déphasage entre le signal de courant ($V_i$) des systèmes partiels de convertisseur (1, 2) et la tension ($V_u$) sur la borne de raccordement de sortie A et **en ce que** pour chaque module de phase (11), la quatrième unité de calcul (9) est prévue pour, en fonctionnement sur courant alternatif, former la valeur ($A_h$) du signal d'amplitude du signal de courant à partir de la valeur effective du courant ($\underline{i_u}$) à la borne de raccordement de sortie (A) et du signal de référence ($V_{ref}$), selon la formule

$$\frac{1}{2} \hat{i}_u \cdot \cos(\omega_u t + \varphi_u) \cdot M_h{}^2 + A_h \cdot M_h \cos(\Delta\varphi) - (1 + V_{ref}) \cdot (1 - V_{ref}) \cdot \hat{i}_u \cdot \cos(\omega_u t + \varphi_u) \equiv 0$$

avec $A_h \equiv M_n$
$\hat{i}_u$ étant la valeur d'amplitude de la valeur effective de courant ($i_u$), $\omega_u$ étant la fréquence de la valeur effective de courant ($i_u$) $\varphi_u$ étant le déphasage de la valeur effective de courant ($i_u$).

8. Ensemble selon la revendication 7, **caractérisé en ce que** pour chaque module de phase (11), une cinquième unité de calcul (8) est prévue pour former à partir d'une valeur ($M_h$) d'amplitude du signal de tension le signal de tension ($V_A$) par rapport à la tension ($V_u$) sur la borne de raccordement de sortie (A).

**9.** Ensemble selon la revendication 8, **caractérisé en ce que** pour chaque module de phase (11), la quatrième unité de calcul (9) est prévue pour former la valeur ($M_h$) d'amplitude du signal de tension à partir de la valeur effective de courant ($i_u$) sur la borne de raccordement de sortie (A) et du signal de référence ($V_{ref}$).

Stand der Technik

**Fig. 1**

Fig. 2

**Fig. 3**

**Fig. 4**

i₁

i₂

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007023064 A1
- DE 102008014898 A1
- WO 2007033852 A2
- EP 1253706 A

**In der Beschreibung aufgeführte Nicht-Patentliteratur**

- On Dynamics and Voltage Control of the Modular Multilevel Converter. *Power Electronics and Applications, 2009, EPE 2009, 13th European Conference on IEEE,* 18. September 2009